# EUROPEAN PATENT APPLICATION

(11) **EP 2 708 807 A2**
(43) Date of publication of application: **19.03.2014**
(21) Application number: 13183980.5
(22) Date of filing: 11.09.2013
(51) Int. Cl.: F21V 7/00, F21S 8/00

(54) **Apparatus for simulating sunlight**

(30) Priority: 13.09.2012 TW 101217695
(71) Applicant: All Real Technology Co., Ltd., 82151 Kaohsiung City (TW)
(72) Inventor: Kuo, Jon-Lian, 82151 Kaohsiung City (TW)
(74) Representative: Chew, Kwan Chong Daniel

(57) **Abstract**

An apparatus for simulating sunlight includes a light source (3) for generating light rays, a first reflector (4) having a curved surface (43) that is disposed to receive and reflect the light rays from the light source (3) to form first reflected parallel light rays that travel in a first direction, and a second reflector (5) disposed to face the first reflector (4) and disposed to receive and reflect the first reflected parallel light rays from the first reflector (4) to form second reflected parallel light rays that travel in a second direction. The first and second directions are mutually orthogonal.

## Description

This application claims priority of Taiwanese application no.101217695, filed on September 13, 2012.

The present invention relates to an apparatus for simulating sunlight, which is adapted for use during testing of a solar battery module having a light receiving surface, and a method of testing the solar battery module.

As oil reserves dwindle, more and more countries are focusing on environmental issues, and therefore the demand for alternative energy resources is becoming more important. For instance, alternative energy resources such as wind power, tidal power, solar power, etc. are being developed. The use of solar power modules is booming, and there is ongoing research for a better conversion efficiency of the solar power modules. For now, high concentrated photovoltaic (HCPV) battery modules have good photoelectric conversion efficiency. The HCPV battery modules utilize lens design to gather sunlight rays that are approximately parallel onto light receiving elements of the solar battery module to increase light absorption rate.

However, after the manufacture of the solar battery module, there is a need to go through testing for determining the conversion efficiency of the solar battery module. Since natural light (sunlight) is affected by weather and have varying intensity, the natural light is unstable and uncontrollable to be a light source for testing of the solar battery module. Commonly, indoor artificial lighting is used to simulate sunlight with uniform luminosity, which is irradiated towards the solar battery module, for obtaining voltage and current characteristics of the solar battery module.

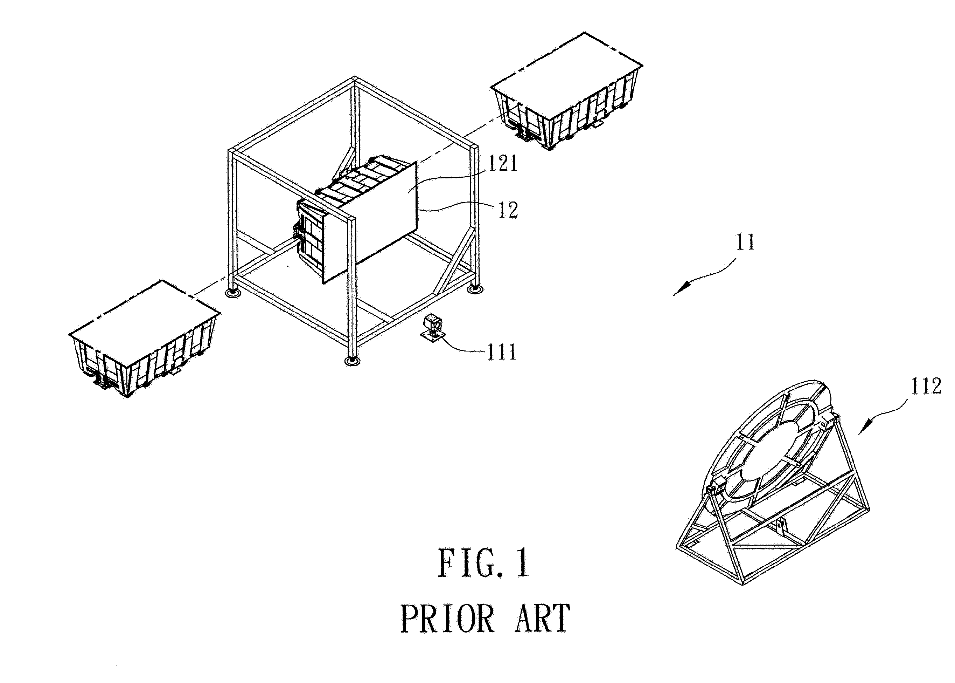

Referring to Figure 1, in order to simulate the characteristics of sunlight that is approximately parallel, the solar simulator test device 11 utilizes a projection light 111 to project light towards a curved mirror 112. The distance between the projection light 111 and the curved mirror 112 is much greater than the focal length of the curved mirror 112. Therefore, the light rays reflected off the curved mirror 112 will be approximately parallel. A solar battery module 12 can be set in the path of the light reflected off the curved mirror 112, for performance testing of the solar battery module 12.

However, the solar battery module 12 is placed horizontally (as shown in the dotted line) for transport. Therefore, in order for the solar battery module 12 to receive the light reflected off the curved mirror 112 during a test, the solar battery module 12 is required to be flipped upright, in order for a lens portion 121 of the solar battery module 12 to face the light reflection path and thus receive the light. Accordingly, during the test, a mechanism for enabling the solar battery module 12 to remain upright is required (not shown). This complicates the structure of the solar simulation test device 11, and the testing duration of the solar battery module 12 becomes longer as flipping of the solar battery module 12 has to be performed.

The object of the present invention is to provide an apparatus for simulating sunlight that may alleviate the above drawback of the prior art.

According to one aspect of the present invention, there is provided an apparatus for simulating sunlight including: a light source for generating light rays;
a first reflector having a curved surface that is disposed to receive and reflect the light rays from the light source to form first reflected parallel light rays that travel in a first direction; and a second reflector disposed to face the first reflector and disposed to receive and reflect the first reflected parallel light rays from the first reflector to form second reflected parallel light rays that travel in a second direction. The first and second directions are mutually orthogonal.

Another obj ect of the present invention is to provide an apparatus for simulating sunlight, which is adapted for use during testing of a solar battery module having a light receiving surface, and which includes:
a light source for generating light rays,
a first reflector having a curved surface that is disposed to receive and reflect the light rays from the light source to form first reflected parallel light rays that travel in a first direction, and a second reflector disposed to face the first reflector and disposed to receive and reflect the first reflected parallel light rays from the first reflector to form second reflected parallel light rays that travel in a second direction toward the light receiving surface.

The apparatus further satisfies at least one of the following conditions: the first and second directions are mutually orthogonal; and the second direction is generally orthogonal to the light receiving surface of the solar battery module.

A further object of the present invention is to provide a method of testing a solar battery module, including:
using a first reflector to receive and reflect light rays generated by a light source to form first reflected parallel light rays that travel in a first direction, and using a second reflector to receive and reflect the first reflected parallel light rays from the first reflector to form second reflected parallel light rays that travel in a second direction toward a light receiving surface of the solar battery module.

The light receiving surface is disposed on a substantially horizontal plane, and at least one of the following conditions is satisfied: the first and second directions are mutually orthogonal; and the second direction is generally orthogonal to the light receiving surface of the solar battery module.

Other features and advantages of the present invention will become apparent in the following detailed description of the preferred embodiment with reference to the accompanying drawings, of which:
Figure 1 is a perspective view illustrating a conventional testing device capable of simulating sunlight;
Figure 2 is a perspective view illustrating an apparatus for simulating sunlight and for use during testing of a solar battery module, of a preferred embodiment of the present invention;
Figure 3 is a side view illustrating a first reflector of the preferred embodiment of the present invention;
Figure 4 is a schematic view illustrating the first reflector having hexagonal reflector plates;
Figure 5 is a schematic view illustrating the first reflector having rectangular reflector plates; and
Figure 6 is a side view illustrating the preferred embodiment of the present invention in a state of use.

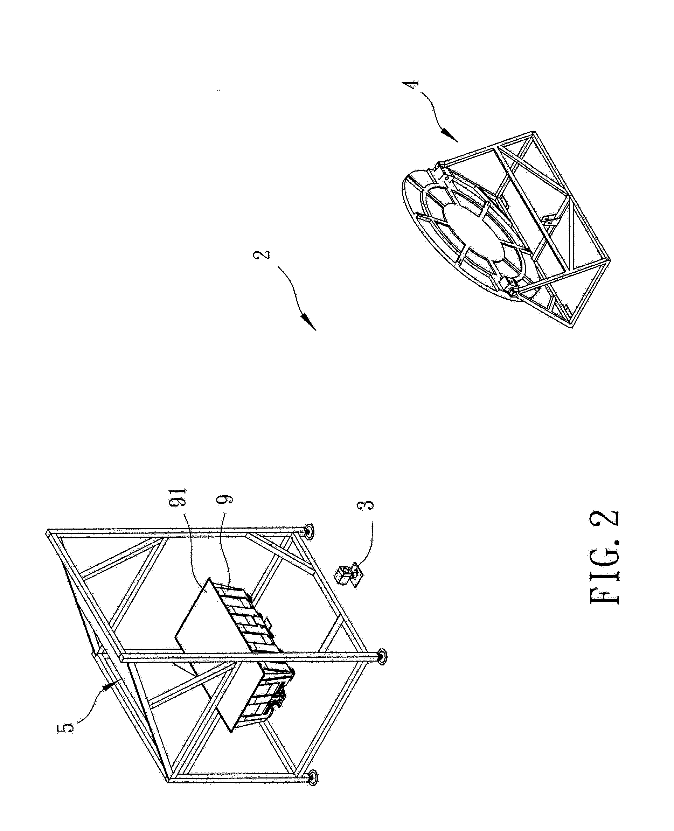

Referring to Figure 2, an apparatus for simulating sunlight 2 of a preferred embodiment of the present invention, includes a light source 3 for generating light rays, a first reflector 4, and a second reflector 5. The apparatus for simulating sunlight 2 is used during a conversion efficiency test on a solar battery module 9, especially on a high concentrated photovoltaic (HCPV) solar battery module 9. The solar battery module 9 has a light receiving surface 91. However, the solar battery module 9 is not limited to be a high concentrated photovoltaic (HCPV) solar battery module, and may be a flat-plate solar battery module.

In this embodiment, the distance between the light source 3 and the first reflector 4 is much greater than a focal length of the first reflector 4, and the light source 3 operates in an intermittent mode, suitable for batch testing of the solar battery modules 9 in a production line. Of course, the light source 3 may operate in a continuous mode, but operating in a continuous mode requires additional measures to prevent problems associated with excess heat generation.

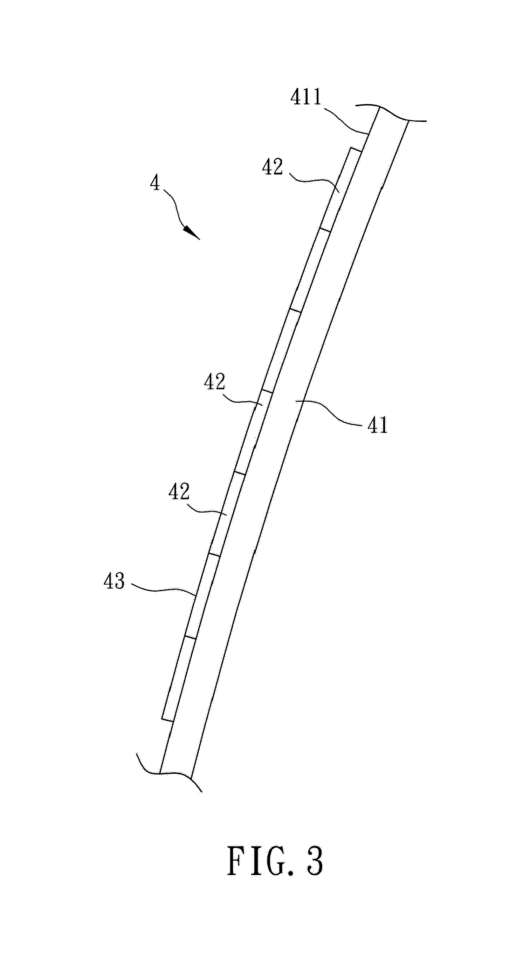

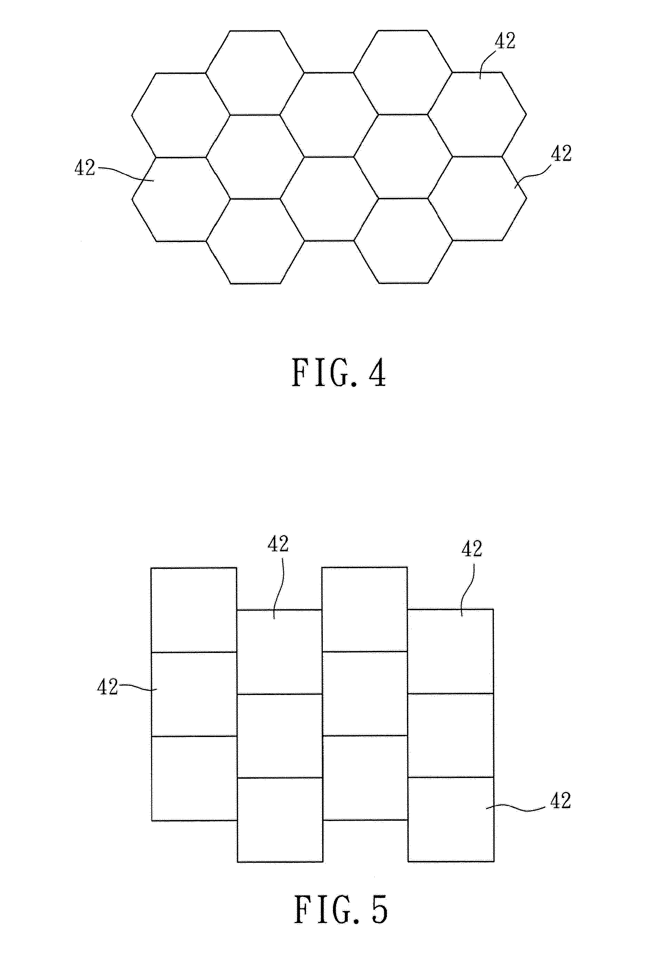

Referring to Figure 3, the first reflector 4 includes a base 41, and a plurality of reflector plates 42 that are attached to the base 41 and that cooperate to form a curved surface 43 of the first reflector. In this embodiment, the base 41 has a curved plate mounting surface 411, and the reflector plates 42 are attached to the curved plate mounting surface 411. Preferably, the first reflector 4 is a convex mirror. The curved surface 43 is used for reflecting the light emitted by the light source 3 (see Figure 2),such that the reflected light rays are essentially parallel with each other. The shape of the reflector plates 42 may be hexagonal as shown in Figure 4 or rectangular as shown in Figure 5, but is not limited to such.

Of course, the first reflector 4 may be modified to not include the base 41, and to only include the reflector plates 42 having a convex curvature that cooperate to form the curved surface 43. However, this type of reflector plate 42 requires high precision when being assembled. Otherwise, deformation and irregularities of the curved surface 43 may be formed, thus rendering production more difficult. Similarly, each of the reflector plates 42 may be hexagonal or rectangular as mentioned above.

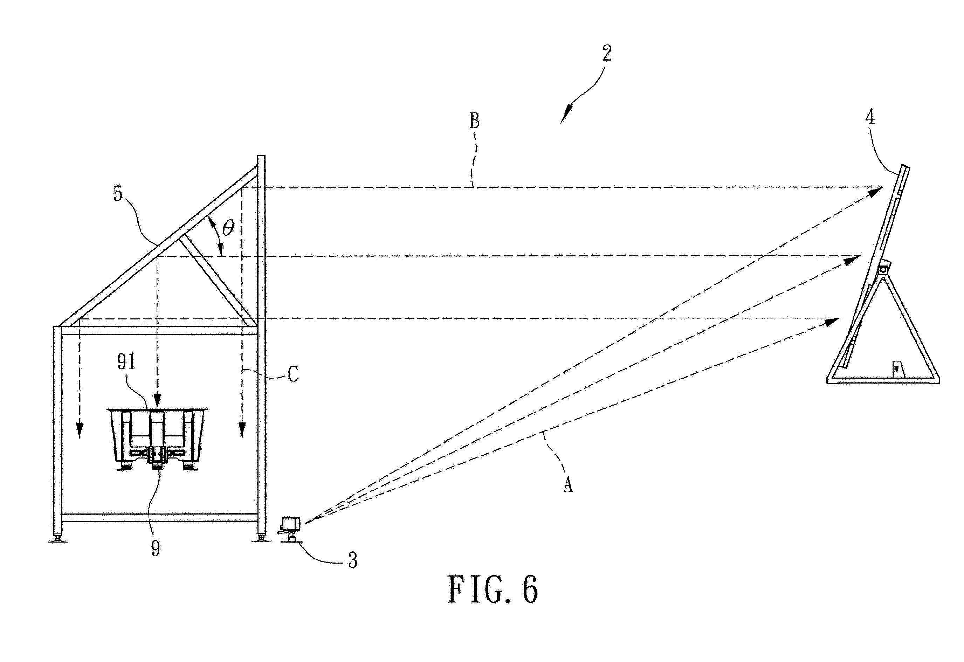

Referring to Figure 2, the second reflector 5 is disposed opposite to the first reflector 4, and reflects the light from the first reflector 4. In this embodiment, there is a 45 degree angle θ (shown in Figure 6) formed between the surface of the second reflector 5 and the light reflected off the first reflector 4. The light reflected off the second reflector 5 is perpendicular to the light reflected by the first reflector 4, and the light reflected off the second reflector 5 is projected towards the light receiving surface 91 of the solar battery module 9.

Referring to Figure 6, the following describes the optical path in the present embodiment. The light source 3 projects light towards the first reflector 4 along a path A. Since the distance between the light source 3 and the first reflector 4 is much greater than the focal length of the first reflector 4, the light rays reflected off the first reflector 4 are parallel to one another, and the light rays are reflected toward the second reflector 5 along a path B. Since the surface of the second reflector 5 and the first reflector 4 forms an angle θ of 45 degrees with the path B, the light along the path B will be deflected vertically downward along a path C towards the light receiving surface 91 of the solar battery module 9. That is, the light reflected off the second reflector 5 is perpendicular with the horizontally disposed light receiving surface 91 of the solar battery module 9 that is being tested.

It is worth mentioning that, if the light projected onto the solar battery module 9 has a specific area that has a particularly high intensity or brightness, light-shielding material (e.g., dot-like ink) may be applied onto a corresponding area in the first reflector 4 or the second reflector 5 to lower the intensity of light projected in the specific area. This enables the light projected on the solar battery module 9 to have good uniformity, which is similar to outdoor natural light. The sizes of the first reflector 4 and the second reflector 5 should correspond with the size of the light receiving surface 91 of the solar battery module 9, enabling the light to be fully reflected onto the light receiving surface 91.

The second reflector 5 is utilized to deflect the light reflected off the first reflector 4 such that the light receiving surface 91 of the solar battery solar battery module 9 is able to receive the parallel light rays. Therefore, during testing, flipping of the solar cell battery 9 is not required, and in addition to accelerating the speed of the test, the structure and the control system of the testing equipment for the solar battery module 9 can be simplified.

A method for testing the solar battery module 9, which is to be implemented using the apparatus 2, includes:
using the first reflector 4 to receive and reflect light rays generated by the light source 3 to form the first reflected parallel light rays that travel in a first direction; and
using the second reflector 5 to receive and reflect the first reflected parallel light rays from the first reflector 4 to form the second reflected parallel light rays that travel in a second direction toward the light receiving surface 91 of the solar battery module 9.

The light receiving surface 91 is disposed on a substantially horizontal plane, and at least one of the following conditions is satisfied: the first and second directions are mutually orthogonal, and the second direction is generally orthogonal to the light receiving surface 91 of the solar battery module 9.

In summary, the apparatus 2 utilizes the second reflector 5 to change the path of the light such that the light can be projected onto the solar battery module 9 during testing and conversion efficiency validation, eliminating the need of flipping the solar batterymodule 9. Without the need to flip solar battery module 9, the structure of associated testing equipment may be simplified and the duration of testing may be shortened.

## Claims

1. An apparatus for simulating sunlight, comprising:
a light source (3) for generating light rays;
a first reflector (4) having a curved surface (43) that is disposed to receive and reflect the light rays from said light source (3) to form first reflected parallel light rays that travel in a first direction; and
a second reflector (5) disposed to face said first reflector (4) and disposed to receive and reflect the first reflected parallel light rays from said first reflector (4) to form second reflected parallel light rays that travel in a second direction, the first and second directions being mutually orthogonal.

2. The apparatus as claimed in Claim 1, wherein said first reflector (4) includes a base (41), and a plurality of reflector plates (42) that are attached to said base (41) and that cooperate to form said curved surface (43) of said first reflector (4), said base (41) having a curved plate mounting surface (411), said reflector plates (42) being attached to said curved plate mounting surface (411).

3. The apparatus as claimed in Claim 2, wherein each of said reflector plates (42) has one of a hexagonal shape and a rectangular shape.

4. The apparatus as claimed in Claim 1, wherein said first reflector (4) includes a plurality of curved reflector plates (42) that are interconnected to form said curved surface (43) of said first reflector (4).

5. The apparatus as claimed in Claim 4, wherein each of said curved reflector plates (42) has one of a hexagonal shape and a rectangular shape.

6. The apparatus as claimed in Claim 4, wherein each of said curved reflector plates (42) is a convex lens.

7. The apparatus as claimed in Claim 1, wherein said light source (3) is configured to generate the light rays continuously.

8. The apparatus as claimed in Claim 1, wherein said light source (3) is configured to generate the light rays intermittently.

9. The apparatus as claimed in Claim 1, wherein said second reflector (5) is disposed at an angle of about 45 degrees relative to the first direction.

10. The apparatus as claimed in Claim 1, wherein a distance between said light source (3) and said first reflector (4) is much larger than a focal length of said first reflector (4).

11. The apparatus as claimed in Claim 1, wherein said first reflector (4) is a convex mirror.

12. The apparatus as claimed in Claim 1, which is for use during testing of a solar battery module (9) having a light receiving surface, wherein the second direction is generally orthogonal to the light receiving surface of the solar battery module (9).

13. An apparatus for simulating sunlight, said apparatus being adapted for use during testing of a solar battery module (9) having a light receiving surface, and comprising:
a light source (3) for generating light rays;
a first reflector (4) having a curved surface (43) that is disposed to receive and reflect the light rays from said light source (3) to form first reflected parallel light rays that travel in a first direction; and
a second reflector (5) disposed to face said first reflector (4) and disposed to receive and reflect the first reflected parallel light rays from said first reflector (4) to form second reflected parallel light rays that travel in a second direction toward the light receiving surface;
wherein said apparatus further satisfies at least one of the following conditions:
the first and second directions are mutually orthogonal; and
the second direction is generally orthogonal to the light receiving surface of the solar battery module (9).

14. A method of testing a solar battery module (9), comprising:
using a first reflector (4) to receive and reflect light rays generated by a light source (3) to form first reflected parallel light rays that travel in a first direction; and
using a second reflector (5) to receive and reflect the first reflected parallel light rays from said first reflector (4) to form second reflected parallel light rays that travel in a second direction toward a light receiving surface of the solar battery module (9);
wherein the light receiving surface is disposed on a substantially horizontal plane, and at least one of the following conditions is satisfied: the first and second directions are mutually orthogonal; and the second direction is generally orthogonal to the light receiving surface of the solar battery module (9).
